(19) Europäisches Patentamt
European Patent Office
Office européen des brevets

(11) **EP 4 782 474 A1**

(12) **EUROPEAN PATENT APPLICATION**
published in accordance with Art. 153(4) EPC

(43) Date of publication:
**29.07.2026 Bulletin 2026/31**

(21) Application number: **24868346.8**

(22) Date of filing: **20.09.2024**

(51) International Patent Classification (IPC):
***C08G 18/66*** (2006.01)

(52) Cooperative Patent Classification (CPC):
**C08G 18/66**

(86) International application number:
**PCT/JP2024/033609**

(87) International publication number:
**WO 2025/063269 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.09.2023 JP 2023158362**

(71) Applicant: **Kuraray Co., Ltd.
Kurashiki-shi, Okayama 710-0801 (JP)**

(72) Inventors:
• **OKURA, Shun
Kamisu-shi, Ibaraki 314-0197 (JP)**
• **TAKAHASHI, Karin
Kamisu-shi, Ibaraki 314-0197 (JP)**
• **SHIMOMURA, Kanae
Kamisu-shi, Ibaraki 314-0197 (JP)**
• **MURATA, Yusuke
Kamisu-shi, Ibaraki 314-0197 (JP)**
• **SHIRASAKA, Hitoshi
Susono-shi, Shizuoka 410-1104 (JP)**

(74) Representative: **D Young & Co LLP
3 Noble Street
London EC2V 7BQ (GB)**

(54) **THERMOPLASTIC POLYURETHANE**

(57) A thermoplastic polyurethane containing a structural unit (A) derived from a polymer polyol (a) having a hydroxy group at a terminal thereof, a structural unit (B) derived from a polyisocyanate (b), and a structural unit (C) derived from a chain extender (c), the polymer polyol (a) containing structural units derived from a branched polyol (a1) and a polycarboxylic acid (a2) having 7 to 11 carbon atoms, and having a number average molecular weight of 500 or more, the structural unit (A) being contained in an amount of 50 to 90% by mass, the structural unit (B) being contained in an amount of 8 to 45% by mass, and the structural unit (C) being contained in an amount of 2 to 10% by mass, in 100% by mass of all structural units in the thermoplastic polyurethane.

EP 4 782 474 A1

## Description

Technical Field

The present invention relates to a thermoplastic polyurethane.

Background Art

Thermoplastic polyurethane (abbreviation "TPU") is suitable for, for example, an extrusion molded article such as a film product, or an injection molding article. For example, TPU having a low hardness is used for a medical tube, a cushion material for shoes, a protection film for a resin or metal.

In general, TPU is produced by polycondensation of a polyol, an isocyanate, and a chain extender. It is said that a polyol unit acts as a main component of a soft segment. It is also said that a chain extender generally has a higher reactivity with an isocyanate than with a polyol and thus, a unit constituted of an isocyanate and a chain extender acts as a main component of a hard segment.

For example, PTL 1 discloses a low hardness thermoplastic polyurethane resin composition without a plasticizer, the resin composition containing a) a polyol containing poly(3-methylpentylene adipate)glycol of 70 to 80% by weight, b) a diisocyanate of 13 to 20% by weight, c) a chain extender of 2 to 6% by weight; and d) a catalyst of 0.001 to 0.1% by weight.

PTL 2 discloses a polyurethane elastomer that contains 70 to 80% of a hydrophobic polyester polyol, 5 to 8% of a chain extender, and 15 to 25% of diphenylmethane diisocyanate and that has a Shore hardness of 55 to 75A, the hydrophobic polyester polyol being obtained by polymerization of a long chain dibasic acid and a diol and having a molecular weight of 2000 to 6000 g/mol; a molar ratio of the long chain dibasic acid and the diol being 1:1.05 to 1.25; the diol being a side chain diol or a combination of a side chain diol and a linear diol; a molar ratio of the linear diol in the combination of a side chain diol and a linear diol being 0 to 20%.

Citation List

Patent Literature

PTL 1: KR 10-2006-0092516 A

PTL 2: CN 112142960 A

Summary of Invention

Technical Problem

Now, for example, when TPU is used in an application for a car component or an industrial component, TPU may be used in a high temperature environment in some cases, and thus, needs to maintain the characteristics, such as strength and rubber elasticity, even in a high temperature environment.

In addition, for example, when TPU is used in a low temperature environment, in an application for a conveyer belt that handles foods in a low temperature, or when TPU is used in a cold region, the low temperature characteristics, such as hardness and flexibility, need to be maintained even in a low temperature environment.

In order to enable the use of TPU in such environments, in recent years, achievement of both of a better heat resistance and superior low temperature characteristics has been required for TPU.

However, as a result of studies by the present inventors, it has been found that the low hardness thermoplastic polyurethane resin composition disclosed in PTL 1 has good low temperature characteristics but cannot have a sufficient heat resistance.

In addition, as a result of studies by the present inventors, the polyurethane elastomer disclosed in PTL 2 has a good heat resistance but does not have sufficient low temperature characteristics.

Thus, the present invention has an object to provide a thermoplastic polyurethane that can achieve both a good heat resistance and superior low temperature characteristics. Solution to Problem

As a result of intensive and extensive studies, the present inventors have found that the above problem can be solved by a thermoplastic polyurethane that satisfies specific requirements.

Specifically, the present invention includes the following inventions.

[1] A thermoplastic polyurethane containing a structural unit (A) derived from a polymer polyol (a) having a hydroxy group at a terminal thereof, a structural unit (B) derived from a polyisocyanate (b), and a structural unit (C) derived from a chain extender (c),

the polymer polyol (a) containing structural units derived from a branched polyol (a1) and a polycarboxylic acid (a2) having 7 to 11 carbon atoms, the polymer polyol (a) having a number average molecular weight of 500 or more,

the structural unit (A) being contained in an amount of 50 to 90% by mass, the structural unit (B) being contained in an amount of 8 to 45% by mass, the structural unit (C) being contained in an amount of 2 to 10% by mass, in 100% by mass of all structural units in the thermoplastic polyurethane.

[2] The thermoplastic polyurethane according to the above [1], in which the structural unit (A) is contained in an amount of 60 to 90% by mass, the structural unit (B) is contained in an amount of 8 to 38% by mass, and the structural unit (C) is contained in an amount of 2 to 8% by mass, in 100% by mass of all structural units in the thermoplastic polyurethane.

[3] The thermoplastic polyurethane according to the above [1] or [2], in which the branched polyol (a1) is 3-methyl-1,5-pentanediol.

[4] The thermoplastic polyurethane according to any one of the above [1] to [3], in which the chain extender (c) is a diol that has a molecular weight of less than 500.

[5] The thermoplastic polyurethane according to any one of the above [1] to [4], in which the thermoplastic polyurethane has a durometer A hardness as measured according to JIS K 7215-1986 of HDA95 or less.

[6] The thermoplastic polyurethane according to any one of the above [1] to [5], in which the thermoplastic polyurethane has a durometer A hardness as measured according to JIS K 7215-1986 of HDA80 or less.

[7] The thermoplastic polyurethane according to any one of the above [1] to [6], in which the thermoplastic polyurethane has a crystallization temperature of -15°C or less, or has no crystallization temperature.

[8] The thermoplastic polyurethane according to any one of the above [1] to [7], in which the thermoplastic polyurethane has a ratio of a complex modulus $E^*$ at 150°C to a complex modulus $E^*$ at 25°C [$E^*(150°C)/E^*(25°C)$] of a sheet produced by injection molding of 0.15 or more.

[9] A method for producing a thermoplastic polyurethane, the method including reacting at least a polymer polyol (a) having a hydroxy group at a terminal thereof in an amount of 50 to 90% by mass, a polyisocyanate (b) in an amount of 8 to 45% by mass, and a chain extender (c) in an amount of 2 to 10% by mass, in 100% by mass of a total amount of raw material components of the thermoplastic polyurethane, to produce the thermoplastic polyurethane,

the polymer polyol (a) being a polyol that contains structural units derived from a branched polyol (a1) and a polycarboxylic acid (a2) having 7 to 11 carbon atoms, and that has a number average molecular weight of 500 or more.

[10] The method for producing a thermoplastic polyurethane according to the above [9], the method including reacting at least the polymer polyol (a) having a hydroxy group at a terminal thereof in an amount of 60 to 90% by mass, the polyisocyanate (b) in an amount of 8 to 38% by mass, and the chain extender (c) in an amount of 2 to 8% by mass, in 100% by mass of the total amount of raw material components of the thermoplastic polyurethane, to produce the thermoplastic polyurethane.

[11] The method for producing a thermoplastic polyurethane according to the above [9] or [10], in which a catalyst (d) is used in an amount of 0.1 to 1,000 ppm by mass relative to a total amount of the polymer polyol (a), the polyisocyanate (b), and the chain extender (c).

[12] A thermoplastic polyurethane composition containing the thermoplastic polyurethane according to any one of the above [1] to [8].

[13] A molded article containing the thermoplastic polyurethane according to any one of the above [1] to [8].

Advantageous Effects of Invention

According to the present invention, it is possible to provide a thermoplastic polyurethane that can achieve both a good heat resistance and superior low temperature characteristics.

Description of Embodiments

The present invention will be described below based on an example of embodiments of the present invention (hereinafter, also referred to as "an aspect of the present invention"). However, the embodiments described below are examples for embodying the technical idea of the present invention and the present invention is not limited to the following description.

An aspect in which any matters stated in the description herein are selected or combined is encompassed in the present invention.

In the description herein, a preferred mode of an embodiment is shown, and a combination of two or more individual preferred modes is also a preferred mode. Any preferred definition can be selected, and, for example, a combination of preferred definitions is more preferred.

In the description herein, unless otherwise specified, "XX to YY" mentioned as a numerical range means "XX or more and YY or less" (XX represents a lower limit and YY represents an upper limit). For example, "10 to 90" simply mentioned as a numerical range represents a range of 10 or more and 90 or less.

In the description herein, regarding a numerical range (the content of each component, the content of each structural unit, or a value calculated therefrom, a property, or the like), lower limits and upper limits described stepwise can each be independently combined. For example, based on a statement of "preferably 10 to 90, more preferably 30 to 60" for the same matter, the "preferred lower limit (10)" and the "more preferred upper limit (60)" can be combined into "10 to 60".

Regarding a numerical range, for example, based on a statement of "preferably 10 to 90, more preferably 30 to 60", an upper limit is not particularly defined and only a lower limit can be defined as "10 or more" or "30 or more", and similarly, a lower limit is not particularly defined and only an upper limit can be defined as "90 or less" or "60 or less". The same applies to the case of an upper limit of a numerical range with "less than" or a lower limit with "more than".

Similarly, for example, based on a statement of "preferably 10 or more, more preferably 30 or more" and a statement of "preferably 90 or less, more preferably 60 or less" for the same matter, the "preferred lower limit (10)" and the "more preferred upper limit (60)" can be combined into "10 or more and 60 or less". Similarly, only the lower limit can be defined as "10 or more" or "30 or more", and similarly, only the upper limit can be defined as "90 or less" or "60 or less". The same applies to the case where the statement of "or more" or "or less" is replaced by "more than" or "less than", respectively. That is, for example, based on a statement of "preferably more than 10 and less than 90, more preferably 30 or more and 60 or less", a lower limit and an upper limit of each phrase can be combined into "more than 10 and 60 or less" or "30 or more and less than 90".

In addition, in the description herein, unless otherwise stated, the "low temperature characteristics" and "heat resistance" mentioned refer to the "low temperature characteristics" and "heat resistance" of a thermoplastic polyurethane which is an aspect of the present invention, and are each specifically properties that are evaluated by a method described in the section of Examples.

[Thermoplastic polyurethane]

The thermoplastic polyurethane which is an aspect of the present invention is a thermoplastic polyurethane that contains a structural unit (A) derived from a polymer polyol (a) having a hydroxy group at a terminal thereof, a structural unit (B) derived from a polyisocyanate (b), and a structural unit (C) derived from a chain extender (c),

the polymer polyol (a) containing structural units derived from a branched polyol (a1) and a polycarboxylic acid (a2) having 7 to 11 carbon atoms, the polymer polyol (a) having a number average molecular weight of 500 or more, the structural unit (A) being contained in an amount of 50 to 90% by mass, the structural unit (B) being contained in an amount of 8 to 45% by mass, the structural unit (C) being contained in an amount of 2 to 10% by mass, in 100% by mass of all structural units in the thermoplastic polyurethane.

It is preferred that the polymer polyol (a) contains structural units derived from the branched polyol (a1) and the polycarboxylic acid (a2) having 7 to 11 carbon atoms, and has a number average molecular weight of 500 or more, and the structural unit (A) is contained in an amount of 60 to 90% by mass, the structural unit (B) is contained in an amount of 8 to 38% by mass, and the structural unit (C) is contained in an amount of 2 to 8% by mass, in 100% by mass of all structural units in the thermoplastic polyurethane.

Hereinbelow, the thermoplastic polyurethane will be described. In the description herein, in the following explanation, unless otherwise stated, "the TPU" refers to the thermoplastic polyurethane which is an aspect of the present invention.

<Structural unit (A)>

The structural unit (A) is derived from a polymer polyol (a) having a hydroxy group at a terminal thereof. The structural unit (A) mainly constitutes a soft segment in the TPU.

(Polymer polyol (a))

The polymer polyol (a) contains structural units derived from a branched polyol (a1) and a polycarboxylic acid (a2) having 7 to 11 carbon atoms, and has a number average molecular weight of 500 or more.

In the description herein, the "polymer polyol" refers to a polyol having a number average molecular weight of 500 or more.

The polymer polyol (a) that has a number average molecular weight of 500 or more is preferred from the viewpoint of mechanical properties of the obtained TPU. In addition, the number average molecular weight of the polymer polyol (a) is preferably 10,000 or less from the viewpoint of being easily charged in synthesizing the TPU. From the same point of view, the number average molecular weight (Mn) of the polymer polyol (a) is preferably 500 to 10,000, more preferably 800 to 8,500, further preferably 1,000 to 7,500, and furthermore preferably 1,500 to 6,500.

The number average molecular weight of the polymer polyol (a) is a value measured by a method described in the section of Examples.

The number of hydroxy groups per molecule of the polymer polyol (a) is, from the viewpoint of the viscosity of the polymer polyol (a) and the melt viscosity of the obtained TPU, preferably 2 to 10, more preferably 2 to 5, further preferably 2 to 4, furthermore preferably 2 to 3, and furthermore preferably 2. In other words, the polymer polyol (a) is more preferably a polymer diol or a polymer triol, and further preferably a polymer diol.

[Branched polyol (a1)]

Since the polymer polyol (a) has a high mobility because of containing a structural unit derived from the branched polyol (a1), the soft segment in the TPU has a high mobility. Thus, for example, even when the hard segment occupies a low proportion in the TPU, crystallization of the soft segment is less liable to occur. As a result, the TPU is not crystallized, or can have a lower crystallization temperature (Tc), for example, a crystallization temperature (Tc) of -15°C or less, leading to superior low temperature characteristics. Accordingly, the TPU can be suitably used in a low temperature environment.

The branched polyol (a1) may be any alcohol that has a branched structure and has two or more hydroxy groups. The number of hydroxy groups per molecule of the branched polyol (a1) is, from the viewpoint of the viscosity of the obtained polymer polyol (a), preferably 2 to 10, more preferably 2 to 5, further preferably 2 to 4, furthermore preferably 2 to 3, and furthermore preferably 2. In other words, the branched polyol (a1) is further preferably a branched diol.

A preferred example of the branched polyol (a1) is a branched aliphatic diol.

As the branched aliphatic diol, for example, a diol having 3 to 11 carbon atoms is preferred, a diol having 4 to 9 carbon atoms is more preferred, a diol having 4 to 7 carbon atoms is further preferred, and a diol having 5 to 7 carbon atoms is furthermore preferred. Examples of the branched aliphatic diol include 1,2-propanediol, 2-methyl-1,3-propanediol, 2,2-dimethyl-1,3-propanediol, 2-ethyl-1,3-propanediol, 2-ethyl-2-methyl-1,3-propanediol, 2,2-diethyl-1,3-propanediol, 2-methyl-1,4-butanediol, 1,2-pentanediol, 1,3-pentanediol, 2,3-pentanediol, 2,4-pentanediol, 2-methyl-2,4-pentanediol, 1,4-pentanediol, 2-methyl-1,5-pentanediol, 3-methyl-1,5-pentanediol, 2-ethyl-2,4-pentanediol, 2-ethyl-1,5-pentanediol, 2,4-dimethyl-1,5-pentanediol, 2,4-diethyl-1,5-pentanediol, 1,2-hexanediol, 1,3-hexanediol, 1,4-hexanediol, 1,5-hexanediol, 2-ethyl-1,6-hexanediol, 2-methyl-1,8-octanediol, 2,7-dimethyl-1,8-octanediol, 2-methyl-1,9-nonanediol, 2,8-dimethyl-1,9-nonanediol, and 2-butyl-2-ethyl-1,3-propanediol. One of them may be used alone or two or more thereof may be used in combination.

In addition, from the viewpoint of high reactivity with the polyisocyanate, the branched aliphatic diol is preferably at least one selected from the group consisting of branched aliphatic diols in which both the two hydroxy groups are each a primary hydroxy group. From the viewpoint that the two hydroxy groups have the same reactivity with the polyisocyanate and can provide a uniform thermoplastic polyurethane, at least one selected from the group consisting of branched aliphatic diols that have mirror-image symmetry is more preferred. From the viewpoint of availability, the branched aliphatic diol is further preferably at least one selected from the group consisting of 2-methyl-1,3-propanediol, 2,2-dimethyl-1,3-propanediol, and 3-methyl-1,5-pentanediol. From the viewpoint of allowing the polymer polyol (a) to have a low viscosity, the branched aliphatic diol is furthermore preferably 3-methyl-1,5-pentanediol.

Examples of the branched aliphatic diol in which both the two hydroxy groups are each a primary hydroxy group include 2-methyl-1,3-propanediol, 2,2-dimethyl-1,3-propanediol, 2-ethyl-1,3-propanediol, 2-ethyl-2-methyl-1,3-propanediol, 2,2-diethyl-1,3-propanediol, 2-methyl-1,4-butanediol, 2-methyl-1,5-pentanediol, 3-methyl-1,5-pentanediol, 2-ethyl-1,5-pentanediol, 2,4-dimethyl-1,5-pentanediol, 2,4-diethyl-1,5-pentanediol, 2-ethyl-1,6-hexanediol, 2-methyl-1,8-octanediol, 2,7-dimethyl-1,8-octanediol, 2-methyl-1,9-nonanediol, 2,8-dimethyl-1,9-nonanediol, and 2-butyl-2-ethyl-1,3-propanediol. One of them may be used alone or two or more thereof may be used in combination.

Examples of the branched aliphatic diol having mirror-image symmetry include 2-methyl-1,3-propanediol, 2,2-dimethyl-1,3-propanediol, 2-ethyl-1,3-propanediol, 2-ethyl-2-methyl-1,3-propanediol, 2,2-diethyl-1,3-propanediol, 3-methyl-1,5-pentanediol, 2,4-dimethyl-1,5-pentanediol, 2,4-diethyl-1,5-pentanediol, and 2-butyl-2-ethyl-1,3-propanediol. One of them may be used alone or two or more thereof may be used in combination.

The polymer polyol (a) may contain a structural unit derived from a polyol other than the branched polyol (a1) as the structural unit derived from a polyol component.

Examples of the other polyol include linear aliphatic diols, such as ethylene glycol, 1,3-propanediol, 1,2-propanediol, 1,4-butanediol, 1,5-pentanediol, 1,6-hexanediol, 1,7-heptanediol, 1,8-octanediol, 1,9-nonanediol, and 1,10-decanediol; alicyclic diols, such as cyclohexanedimethanol and cyclohexanediol; and a diol obtained by polymerizing a cyclic monomer with, as an initiator, the branched polyol (a1), such as polyethylene glycol, polypropylene glycol, polytetramethylene glycol, or polycaprolactone, having a number average molecular weight of 300 to 3,000, or the aforementioned other polyol.

From the viewpoint of more superior low temperature characteristics, the content of the structural unit derived from the branched polyol (a1) in the polymer polyol (a) is, in 100% by mass of the total amount of the structural units derived from the polyols that constitute the polymer polyol (a), preferably 30 to 100% by mass, more preferably 50 to 100% by mass, further preferably 60 to 100% by mass, furthermore preferably 75 to 100% by mass, furthermore preferably 90 to 100% by mass, furthermore preferably 95 to 100% by mass, and may be 100% by mass.

[Polycarboxylic acid (a2) having 7 to 11 carbon atoms]

The polymer polyol (a) contains a structural unit derived from a polycarboxylic acid (a2) having 7 to 11 carbon atoms.

When the polycarboxylic acid (a2) has 7 or more carbon atoms, the hydrophobicity of the soft segment becomes higher than in the case of a polycarboxylic acid having 6 or less carbon atoms, leading to enhanced phase separation with the hard segment which has a high hydrophilicity. When the phase separation between the soft segment and the hard segment is enhanced, cohesive force of the hard segment is increased, and thus, the complex modulus of the TPU is less liable to decrease even in a higher temperature so that the TPU is more superior in the heat resistance.

When the polycarboxylic acid (a2) has 11 or less carbon atoms, reduction in the mobility of the structural unit derived from the polycarboxylic acid in the soft segment is prevented and thus, reduction in the mobility of the soft segment can be prevented so that the TPU is superior in the low temperature characteristics.

The number of carbon atoms of the polycarboxylic acid (a2) is preferably 7 to 10, may be 8 to 10, or may be 9 or 10.

The polycarboxylic acid (a2) may be any carboxylic acid that has 7 to 11 carbon atoms and that has two or more carboxy groups or any acid anhydride thereof. The number of carboxy groups per molecule of the polycarboxylic acid (a2) is, from the viewpoint of the viscosity of the obtained polymer polyol (a), preferably 2 to 10, more preferably 2 to 5, further preferably 2 to 4, furthermore preferably 2 to 3, and furthermore preferably 2. In other words, the polycarboxylic acid (a2) is further preferably a dicarboxylic acid having 7 to 11 carbon atoms.

Examples of the dicarboxylic acid having 7 to 11 carbon atoms include an aliphatic dicarboxylic acid having 7 to 11 carbon atoms, an alicyclic dicarboxylic acid having 7 to 11 carbon atoms, and aromatic dicarboxylic acid having 7 to 11 carbon atoms. The dicarboxylic acid having 7 to 11 carbon atoms is preferably an aliphatic dicarboxylic acid having 7 to 11 carbon atoms.

Examples of the aliphatic dicarboxylic acid having 7 to 11 carbon atoms include pimelic acid (the number of carbon atoms: 7), suberic acid (the number of carbon atoms: 8), azelaic acid (the number of carbon atoms: 9), sebacic acid (the number of carbon atoms: 10), and undecanedioic acid (the number of carbon atoms: 11).

Examples of the alicyclic dicarboxylic acid having 7 to 11 carbon atoms include 1,1-cyclohexanedicarboxylic acid (the number of carbon atoms: 8), 1,2-cyclohexanedicarboxylic acid (the number of carbon atoms: 8), 1,3-cyclohexanedicarboxylic acid (the number of carbon atoms: 8), and 1,4-cyclohexanedicarboxylic acid (the number of carbon atoms: 8).

Examples of the aromatic dicarboxylic acid having 7 to 11 carbon atoms include phthalic acid (the number of carbon atoms: 8), isophthalic acid (the number of carbon atoms: 8), and terephthalic acid (the number of carbon atoms: 8).

As the polycarboxylic acid (a2), one kind may be used alone or two or more kinds may be used in combination.

The polymer polyol (a) may contain as the polycarboxylic acid component, a structural unit derived from a polycarboxylic acid other than the polycarboxylic acid (a2) having 7 to 11 carbon atoms.

Examples of the other polycarboxylic acid include aliphatic dicarboxylic acids other than those having 7 to 11 carbon atoms, such as succinic acid, glutaric acid, adipic acid, and dodecanedioic acid; alicyclic dicarboxylic acids other than those having 7 to 11 carbon atoms; and an aromatic dicarboxylic acid other than those having 7 to 11 carbon atoms, such as 2,6-naphthalenedicarboxylic acid.

The content of the structural unit derived from the polycarboxylic acid (a2) having 7 to 11 carbon atoms in the polymer polyol (a) is, from the viewpoint of easily achieving both of superior low temperature characteristics and heat resistance, in 100% by mass of the total amount of the structural units derived from the polycarboxylic acids that constitute the polymer polyol (a), preferably 50 to 100% by mass, more preferably 60 to 100% by mass, further preferably 70 to 100% by mass, furthermore preferably 80 to 100% by mass, furthermore preferably 90 to 100% by mass, furthermore preferably 95 to 100% by mass, and may be 100% by mass.

The total content of the structural unit derived from the branched polyol (a1) and the structural unit derived from the polycarboxylic acid (a2) having 7 to 11 carbon atoms in the polymer polyol (a) is, from the viewpoint of easily achieving both of more superior low temperature characteristics and heat resistance, in 100% by mass of the total amount of the structural units that constitute the polymer polyol (a), preferably 60 to 100% by mass, more preferably 80 to 100% by mass, further preferably 85 to 100% by mass, furthermore preferably 90 to 100% by mass, furthermore preferably 95 to 100% by mass, and may be 100% by mass.

[Method for producing polymer polyol (a)]

The method for producing the polymer polyol (a) is not particularly limited, and the polymer polyol (a) can be produced by a method that is similar to a known method for polycondensating a polyester polyol.

For example, the polymer polyol (a) can be produced by charging the branched polyol (a1) and the polycarboxylic acid (a2) having 7 to 11 carbon atoms at a prescribed ratio, performing an esterification reaction or a transesterification reaction, and further subjecting the obtained reaction product to a polycondensation reaction in the presence of a polycondensation catalyst at a high temperature in vacuum.

Note that, as the polycondensation catalyst used in production of the polymer polyol (a), a known catalyst can be used, and examples thereof include titanium compounds, such as tetramethoxytitanium, tetraethoxytitanium, tetra-n-propoxytitanium, tetraisopropoxytitanium, and tetrabutoxytitanium; tin compounds, such as di-n-butyltin oxide, di-n-butyltin dilaurate, and dibutyltin diacetate; and a combination of an acetic acid salt of magnesium, calcium, zinc, or the like and antimony oxide or the titanium compound.

The polycondensation catalyst is preferably used in an amount of 5 to 500 ppm by mass relative to the total amount of the branched polyol (a1) and the polycarboxylic acid (a2) having 7 to 11 carbon atoms.

<Structural unit (B)>

The structural unit (B) is derived from a polyisocyanate (b). The structural unit (B) mainly constitutes a hard segment together with the structural unit (C) described later in the TPU.

(Polyisocyanate (b))

As the polyisocyanate (b), a polyisocyanate used for producing a typical thermoplastic polyurethane can be used.

From the viewpoint of the melt viscosity of the obtained TPU, the number of isocyanate groups per molecule of the polyisocyanate (b) is preferably 2 to 10, more preferably 2 to 5, further preferably 2 to 4, furthermore preferably 2 to 3, and furthermore preferably 2. That is, the polyisocyanate (b) is more preferably a diisocyanate or a triisocyanate, and further preferably a diisocyanate.

The diisocyanate is preferably an organic diisocyanate. The organic diisocyanate means at least one selected from the group consisting of an aliphatic diisocyanate, an alicyclic diisocyanate, and and an aromatic diisocyanate.

Examples of the polyisocyanate (b) include aliphatic or alicyclic diisocyanates, such as ethylene diisocyanate, tetramethylene diisocyanate, pentamethylene diisocyanate, hexamethylene diisocyanate, 2,2,4-trimethylhexamethylene diisocyanate, 2,4,4-trimethylhexamethylene diisocyanate, dodecamethylene diisocyanate, isophorone diisocyanate, isopropylidene bis(4-cyclohexyl isocyanate), 1,3-bis(isocyanatomethyl)cyclohexane, cyclohexylmethane diisocyanate, methylcyclohexane diisocyanate, 4,4'-dicyclohexylmethane diisocyanate, lysine diisocyanate, 2,6-diisocyanatomethyl caproate, bis(2-isocyanatoethyl) fumarate, bis(2-isocyanatoethyl) carbonate, 2-isocyanatoethyl-2,6-diisocyanatohexanoate, cyclohexylene diisocyanate, methylcyclohexylene diisocyanate, and bis(2-isocyanatoethyl)-4-cyclohexene; and aromatic diisocyanates, such as 2,4'-diphenylmethane diisocyanate, 4,4'-diphenylmethane diisocyanate (abbreviation: MDI), 2,4-tolylene diisocyanate, 2,6-tolylene diisocyanate, m-phenylene diisocyanate, p-phenylene diisocyanate, m-xylylene diisocyanate, p-xylylene diisocyanate, 1,5-naphthylene diisocyanate, 4,4'-diisocyanatobiphenyl, 3,3'-dimethyl-4,4'-diisocyanatobiphenyl, 3,3'-dimethyl-4,4'-diisocyanatodiphenylmethane, chlorophenylene-2,4-diisocyanate, and tetramethylxylylene diisocyanate. One of them may be used alone or two or more thereof may be used in combination.

Among them, from the viewpoint of availability, the polyisocyanate (b) is preferably at least one selected from the group consisting of hexamethylene diisocyanate, isophorone diisocyanate, 4,4'-dicyclohexylmethane diisocyanate, 1,3-bis(isocyanatomethyl)cyclohexane, 1,5-naphthylene diisocyanate, m-xylylene diisocyanate, and 4,4'-diphenylmethane diisocyanate (MDI). From the viewpoint of good reactivity, the polyisocyanate (b) is more preferably at least one selected from the group consisting of 1,5-naphthylene diisocyanate, m-xylylene diisocyanate, and 4,4'-diphenylmethane diisocyanate (MDI), and further preferably 4,4'-diphenylmethane diisocyanate (MDI).

<Structural unit (C)>

The structural unit (C) is derived from a chain extender (c). As described above, it is said that a main component of the hard segment is generally, but not limited to, a unit constituted of an isocyanate and a chain extender. Thus, the structural unit (C) mainly constitutes the hard segment together with the structural unit (B) in the TPU.

(Chain extender (c))

As the chain extender (c) which is a raw material constituting the structural unit (C), any of general chain extenders that have conventionally been used for producing a thermoplastic polyurethane may be used. Specifically, a low molecular weight compound that has, in the molecular, two or more active hydrogen atoms capable of reacting with isocyanate groups is preferably used, and a compound that has, in the molecular, two or more active hydrogen atoms capable of reacting with isocyanate groups and that has a molecular weight of less than 500 is more preferably used. The molecular weight is further preferably 450 or less, and furthermore preferably 400 or less.

Examples of the chain extender (c) include diols, such as ethylene glycol, diethylene glycol, 1,2-propanediol, 1,3-propanediol, 2-methyl-1,3-propanediol, 2,2-diethyl-1,3-propanediol, 2,2,4-trimethyl-1,3-propanediol, 2-butyl-2-ethyl-1,3-propanediol, 1,2-butanediol, 1,3-butanediol, 2,3-butanediol, 1,4-butanediol, 1,5-pentanediol, neopentyl glycol, 1,6-hexanediol, 2,5-dimethyl-2,5-hexanediol, 3-methyl-1,5-pentanediol, 1,4-bis($\beta$-hydroxyethoxy)benzene, 1,4-cyclohexanediol, cyclohexanedimethanol (for example, 1,4-cyclohexanedimethanol), bis($\beta$-hydroxyethyl)terephthalate, 1,9-nonanediol, m-xylylene glycol, p-xylylene glycol, and triethylene glycol; diamines, such as ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, 3-methylpentamethylenediamine, 1,2-cyclohexanediamine, 1,3-cyclohexanediamine, 1,4-cyclohexanediamine, 1,2-diaminopropane, 1,3-diaminopropane, hydrazine, xylylenediamine, isophoronediamine, piperazine, o-phenylenediamine, m-phenylenediamine, p-phenylenediamine, tolylenediamine, xylenediamine, adipic acid dihydrazide, isophthalic acid dihydrazide, 4,4'-diaminodiphenylmethane, 4,4'-diaminodiphenyl ether, 4,4'-bis(4-aminophenoxy)biphenyl, 4,4'-bis(3-aminophenoxy)biphenyl, 1,4-bis(4-aminophenoxy)benzene, 1,3-bis(4-aminophenoxy)benzene, 1,3-bis(3-aminophenoxy)benzene, 3,4'-diaminodiphenyl ether, 4,4'-diaminodiphenyl sulfone, 3,4-diaminodiphenyl sulfone, 3,3'-diaminodiphenyl sulfone, 4,4'-methylene-bis(2-chloroaniline), 3,3'-dimethyl-4,4'-diaminobiphenyl, 4,4'-diaminodiphenyl sulfide, 2,6-diaminotoluene, 2,4-diaminochlorobenzene, 1,2-diaminoanthraquinone, 1,4-diaminoanthraquinone, 3,3'-diaminobenzophenone, 3,4-diaminobenzophenone, 4,4'-diaminobenzophenone, 4,4'-diaminobibenzyl, 2,2'-diamino-1,1'-binaphthalene, a 1,n-bis(4-aminophenoxy)alkane (n is 3 to 10), such as 1,3-bis(4-aminophenoxy)alkane, 1,4-bis(4-aminophenoxy)alkane, and 1,5-bis(4-aminophenoxy)alkane, 1,2-bis[2-(4-aminophenoxy)ethoxy]ethane, 9,9-bis(4-aminophenyl)fluorene, and 4,4'-diaminobenzanilide. One of them may be used alone or two or more thereof may be used in combination.

Among the aforementioned compounds, the chain extender (c) is preferably a diol, and more preferably a diol having a molecular weight of less than 500. The molecular weight of the diol is further preferably 450 or less, and furthermore preferably 400 or less.

The diol having a molecular weight of less than 500 is, from the viewpoint of availability and reactivity, preferably at least one selected from the group consisting of ethylene glycol, 1,3-propanediol, 1,4-butanediol, 1,5-pentanediol, 1,6-hexanediol, 1,9-nonanediol, 2-methyl-1,3-propanediol, 2,2-dimethyl-1,3-propanediol, and 3-methyl-1,5-pentanediol, more preferably at least one selected from the group consisting of ethylene glycol, 1,3-propanediol, 1,4-butanediol, 1,6-hexanediol, 1,9-nonanediol, and 3-methyl-1,5-pentanediol, further preferably at least one selected from the group consisting of ethylene glycol, 1,3-propanediol, and 1,4-butanediol, furthermore preferably at least one selected from the group consisting of ethylene glycol and 1,4-butanediol.

Here, the molecular weight of the chain extender (c) refers to a value obtained from the total sum of the atomic weights of the elements that constitute the compound. For example, when the chain extender (c) is the diol, the molecular weight can also be calculated as the total sum of the atomic weights of the elements that constitute the molecular formula representing the diol.

In addition, the molecular weight of the chain extender (c) can also be measured using, for example, gas chromatograph mass spectrometry (GC-MS).

<Another structural unit (U)>

The TPU may further contain, in addition to the structural units (A), (B), and (C), another structural unit (U) unless the object and effect of the present invention are impaired.

Examples of the other structural unit (U) include a structural unit derived from a polycarbonate, a structural unit derived from a polyether, and a structural unit derived from a polyurea.

Unless the object and effect of the present invention are impaired, the raw materials that constitute the structural units (A), (B), and (C) and the other structural unit (U) in the TPU may be produced from a raw material derived from petroleum or may be produced from a raw material derived from a plant. Alternatively, the raw materials may be produced by using raw materials of a mass balance method.

For example, 3-methyl-1,5-pentanediol which is the most preferred branched polyol (a1) can be synthesized by using as a starting material a petroleum-derived isobutene and performing an ene reaction and an oxo reaction, followed by a hydrogenation reaction. In addition, 3-methyl-1,5-pentanediol can also be synthesized by a hydrogenation reaction of 3-methyl-2-pentene-1,5-diol, which can be obtained by an ene reaction of isobutene, and an isomer thereof. Note that, for example, as the isobutene, not only the petroleum-derived isobutene but also one obtained by a dehydration reaction of 2-methyl-1-propanol which can be obtained by fermentation of a plant-derived saccharide may be used. In addition, for example, 3-methyl-1,5-pentanediol can also be synthesized by using, as a starting material, mevalolactone which can be obtained by fermentation of a plant-derived saccharide and subjecting the mevalolactone to a dehydration reaction, an olefine hydrogenation reaction, and a lactone hydrogenation reaction in this order. In addition, 3-methyl-1,5-pentanediol can also be synthesized by subjecting mevalolactone to a lactone hydrogenation reaction, a dehydration reaction, and an olefine hydrogenation reaction in this order. Sebacic acid which is preferred as the polycarboxylic acid (a2) can be synthesized by using as a raw material a plant-derived castor oil and performing an alkaline resolution method.

<Contents of structural units>

(Content of structural unit (A))

The TPU contains the structural unit (A) in an amount of 50 to 90% by mass in 100% by mass of all structural units in the TPU. When the content of the structural unit (A) is 50% by mass or more, the TPU having a low hardness in a suitable range can be synthesized. When the content of the structural unit (A) is 90% by mass or less, the TPU having good mechanical properties can be synthesized. From the same point of view, the content of the structural unit (A) in 100% by mass of all structural units in the TPU is preferably 60 to 90% by mass, more preferably 65 to 90% by mass, further preferably 70 to 90% by mass, and furthermore preferably 75 to 90% by mass.

(Content of structural unit (B))

The TPU contains the structural unit (B) in an amount of 8 to 45% by mass in 100% by mass of all structural units in the TPU. When the content of the structural unit (B) is 8% by mass or more, the TPU having good mechanical properties can be synthesized. When the content of the structural unit (B) is 45% by mass or less, the TPU having a low hardness in a suitable range can be synthesized. From the same point of view, the content of the structural unit (B) in 100% by mass of all structural units in the TPU is preferably 8 to 38% by mass, more preferably 8 to 33% by mass, further preferably 8 to 28% by mass, and from the viewpoint of capability of synthesizing the TPU having good mechanical properties and having a hardness in a lower range, furthermore preferably 8 to 23% by mass.

(Content of structural unit (C))

The TPU contains the structural unit (C) in an amount of 2 to 10% by mass in 100% by mass of all structural units in the TPU. When the content of the structural unit (C) is 2% by mass or more, the TPU having good mechanical properties can be synthesized. When the content of the structural unit (C) is 8% by mass or less, the TPU having a low hardness in a suitable range can be synthesized. From the same point of view, the content of the structural unit (C) in 100% by mass of all structural units in the TPU is preferably 2 to 8% by mass, and from the viewpoint of capability of synthesizing the TPU having good mechanical properties and having a hardness in a lower range, more preferably 2 to 6% by mass, further preferably 2 to 5% by mass, and furthermore preferably 3 to 4% by mass.

(Total content of structural unit (A), structural unit (B), and structural unit (C))

The total content of the structural unit (A), the structural unit (B), and the structural unit (C) in 100% by mass of all structural units in the TPU is 70 to 100% by mass, preferably 75 to 100% by mass, more preferably 80 to 100% by mass, further preferably 86 to 100% by mass, furthermore preferably 90 to 100% by mass, furthermore preferably 95 to 100% by mass, and may be 100% by mass.

Here, each content of the structural unit (A), the structural unit (B), or the structural unit (C) can be the content which is independently described above, but it can be naturally understood that such a combination of the contents each selected that the total content of the structural unit (A), the structural unit (B), and the structural unit (C) exceeds 100% by mass is excluded. In other words, the combination of the contents of the structural unit (A), the structural unit (B), and the structural unit (C) is such a combination that the total content of the structural unit (A), the structural unit (B), and the structural unit (C) does not exceed 100% by mass.

In the description herein, the content of each of the structural units in the TPU can be calculated from the blending amount of the raw material compound that forms the structural unit. In addition, the content can be determined by measurement by $^1$H-NMR of the obtained TPU. In this case, the content of each of the structural units can also be determined by measurement by $^1$H-NMR after founding the structural units that constitute the TPU by the use of analysis

by $^{13}$C-NMR, GC-MS, and the like, according to the need.

<Method for producing thermoplastic polyurethane>

An example of a method for producing the thermoplastic polyurethane is a method for producing a thermoplastic polyurethane, the method including reacting at least a polymer polyol (a) having a hydroxy group at a terminal thereof in an amount of 50 to 90% by mass, a polyisocyanate (b) in an amount of 8 to 45% by mass, and a chain extender (c) in an amount of 2 to 10% by mass, in 100% by mass of the total amount of raw material components of the thermoplastic polyurethane, to produce the thermoplastic polyurethane,

the polymer polyol (a) being a polyol that contains structural units derived from a branched polyol (a1) and a polycarboxylic acid (a2) having 7 to 11 carbon atoms and that has a number average molecular weight of 500 or more.

In the production method of TPU, a catalyst (d) is preferably used.

The thermoplastic polyurethane obtained by the production method is the same as one described in the section of the thermoplastic polyurethane which is an aspect of the present invention and a suitable aspect thereof is also the same.

The method for producing the TPU is not particularly limited, as long as the TPU can be obtained by blending the raw materials described above in the amounts described above. For example, the TPU can be obtained by polymerization by an urethanization reaction using a known prepolymer method or one-shot method. In general, it is considered that the structural unit (C) derived from the chain extender (c) in a molecular chain is more liable to be regularly arranged, resulting in a better dispersibility of the structural unit (C) in the molecular chain, in a prepolymer method than in a one-shot method. Thus, it is considered that TPU obtained by a prepolymer method is more superior in phase separation of the soft segment and the hard segment. However, it is difficult for those skilled in the art to chemically analyze the dispersibility of the structural unit (C) in a molecular chain. In addition, phase separation can be qualitatively analyzed by a small-angle X-ray diffraction method or the like, but it is difficult to quantitatively analyze the degree of phase separation.

It is possible to perform solution polymerization in a solvent that is inactive to the reaction or it is also possible to perform melt polymerization in the absence of any solvent. Specific examples of a method of the melt polymerization include a method in which the components described above are blended in a prescribed ratio substantially in the absence of a solvent and while melt-mixing the components using a single screw or multi-screw extruder, melt polymerization is performed (continuous melt polymerization method), and a method in which melt polymerization is performed in a weak-kneading or non-kneading condition with a batch reactor (batch melt polymerization method).

Here, the solution polymerization method is more superior in the phase separation than the melt polymerization method, and the batch melt polymerization is more superior in the phase separation than the continuous melt polymerization method. This is supposedly because, in the case without an influence of kneading in polymerization, the soft segment and the hard segment are more easily spontaneously separated.

As an aspect of the method for producing a TPU, for example, a prepolymer method in which the chain extender (c) is reacted with an isocyanate group-terminated prepolymer obtained by reacting the polymer polyol (a) and the polyisocyanate (b) in advance can be suitably used. In the prepolymer method, when the chain extender (c) is reacted with the isocyanate group-terminated prepolymer, the catalyst (d) is preferably used.

(Catalyst (d))

As the catalyst (d), an urethanization reaction catalyst which has conventionally been used in production of a thermoplastic polyurethane can be used. Examples of the urethanization reaction catalyst include an organic tin compound, an organic zinc compound, an organic bismuth compound, an organic titanium compound, an organic zirconium compound, and an amine compound. Among them, from the viewpoint of reactivity, at least one selected from the group consisting of an amine compound, an organic tin compound, and an organic bismuth compound are preferred, and from the viewpoint of handleability, an amine compound is more preferred.

The amine compound is preferably a tertiary amine compound. Examples of the tertiary amine compound include triethylenediamine, N,N,N',N'-tetramethyl-1,6-hexanediamine, bis(2-dimethylaminoethyl) ether, N,N,N',N",N"-pentamethyldiethylenetriamine, N-methylmorpholine, N-ethylmorpholine, N,N-dimethylethanolamine, 1-methylimidazole, 1,2-dimethylimidazole, N,N'-dimethylpiperazine, 1,4-diazabicyclo[2,2,2]octane, 1,8-diazabicyclo[5,4,0]undecene-7, 1,5-diazabicyclo[4,3,0]nonene-5, 1,8-diazabicyclo[5,4,0]decene-7, and 1,4-diazabicyclo[3,3,3]octane-4. One of them may be used alone or two or more thereof may be used in combination.

The amount of the catalyst (d) used is, from the viewpoint of ensuring a suitable polymerization reaction rate, relative to the total amount of the polymer polyol (a), the polyisocyanate (b), and the chain extender (c), preferably 0.1 to 1,000 ppm by mass, more preferably 1 to 800 ppm by mass, and further preferably 10 to 500 ppm by mass.

<Various characteristics of thermoplastic polyurethane>

(Durometer A hardness)

From the viewpoint of obtaining better softness, the TPU preferably has a durometer A hardness as measured according to JIS K 7215-1986 of HDA95 or less. From the same point of view, the durometer A hardness is more preferably 90 or less, further preferably 80 or less, furthermore preferably HDA75 or less, and furthermore preferably HDA70 or less.

In addition, from the viewpoint of easy molding, the durometer A hardness is preferably the HDA30 or more. From the same point of view, the durometer A hardness is more preferably HDA50 or more, and further preferably HDA60 or more.

In other words, the durometer A hardness is preferably HDA30 to 95, more preferably HDA30 to 90, further preferably HDA30 to 80, furthermore preferably HDA50 to 75, and furthermore preferably HDA60 to 70.

In addition, as phase separation of the TPU proceeds by an aging step as described later, the durometer A hardness increases.

Here, as a method for decreasing the hardness of the thermoplastic polyurethane, for example, a method in which a plasticizer is added to a high-hardness thermoplastic polyurethane to use the resulting low hardness thermoplastic polyurethane composition is known.

On the other hand, as described later, the TPU which is an aspect of the present invention can achieve such a low hardness as described above with substantially no plasticizer. That is, the TPU can be suitably used also as a so-called plasticizer free low hardness thermoplastic polyurethane. A plasticizer free low hardness thermoplastic polyurethane is preferred from the viewpoint of being capable of preventing bleeding-out and blooming-out of a plasticizer from the thermoplastic polyurethane composition.

(Crystallization temperature)

When the TPU has a crystallization temperature, from the viewpoint of being superior in the low temperature characteristics, the crystallization temperature is preferably -15°C or less, more preferably -30°C or less, and further preferably -40°C or less. The lower limit of the crystallization temperature is not particularly limited.

The value of the crystallization temperature is specifically a value measured by a method described in the section of Examples.

As the TPU, a TPU in which no crystallization temperature is observed when the crystallization temperature is measured by the method described in the section of Examples is also preferred.

Note that the crystallization temperature does generally not depend on the degree of the phase separation.

(Ratio of complex modulus E* at 150°C to complex modulus E* at 25°C)

From the viewpoint of being superior in the heat resistance, the TPU has a ratio of the complex modulus E* at 150°C to the complex modulus E* at 25°C [E*(150°C)/E*(25°C)] of a sheet produced by injection molding (a thermoplastic polyurethane sheet after injection molding) of preferably 0.15 or more, more preferably 0.17 or more, further preferably 0.18 or more, furthermore preferably 0.20 or more, furthermore preferably 0.25 or more, and furthermore preferably 0.30 or more.

The upper limit of the ratio [E*(150°C)/E*(25°C)] of a sheet produced by injection molding is, for example, from the viewpoint of being more superior in the heat resistance, preferably 1.20 or less, more preferably 1.15 or less, further preferably 1.10 or less, furthermore preferably 1.08 or less, furthermore preferably 1.05 or less, and furthermore preferably 1.03 or less.

As an aspect of the TPU, from the viewpoint of being more superior in the heat resistance, the ratio [E*(150°C)/E*(25°C)] of a sheet produced by injection molding is preferably 0.15 to 1.20, more preferably 0.17 to 1.15, further preferably 0.18 to 1.10, furthermore preferably 0.20 to 1.08, furthermore preferably 0.25 to 1.05, and furthermore preferably 0.30 to 1.03.

The ratio [E*(150°C)/E*(25°C)] that is within the above range indicates a small difference between the complex modulus at 25°C and the complex modulus at 150°C and thus, also indicates a smaller change in properties of the thermoplastic polyurethane between in a low temperature environment and in a high temperature environment. That is, this indicates a more superior heat resistance of the thermoplastic polyurethane.

The value of the ratio [E*(150°C)/E*(25°C)] of a sheet produced by injection molding is specifically a value measured by a method described in the section of Examples.

Here, a low phase separation leads to a low value of the ratio [E*(150°C)/E*(25°C)]. When the phase separation proceeds by an aging step as described later, the ratio [E*(150°C)/E*(25°C)] increases.

As the sheet produced by injection molding, for example, one according to the item 3.3 of JIS K 7311-1995 Standard can be used.

Since the sheet used for evaluation needs to be a sheet without molding failure, the conditions of the injection molding are preferably appropriately set so that molding failure does not occur in the resulting sheet. The conditions in molding are preferably set, for example, so that the TPU can be introduced throughout the mold and molding failure, such as contraction of a molded body, does not occur. That is, since it is necessary to conduct evaluation on a sheet without molding failure, the conditions of injection molding are preferably appropriately set according to the properties of the TPU used.

Thus, for example, when comparison is performed by the evaluation, it is desirable that sheets produced by the same injection molding conditions as much as possible are evaluated, but since the first priority is given to production of a sheet without molding failure (a sheet with molding failure cannot be tested in the first place), there may be a case where it is difficult to make all the molding conditions the same. Thus, sheets needed for evaluation may be produced in conditions as close as possible to the extent that molding failure does not occur.

As described above, the conditions of injection molding are preferably appropriately set according to the composition and the like of the TPU used. For example, as an aspect of injection conditions, using an injection molding machine, melt kneading is performed in a condition of the cylinder top temperature of 130 to 280°C and injection molding is performed in conditions of the injection pressure of 1 to 200 MPa, the mold retention time of 3 seconds to 10 minutes, and the mold temperature of 0 to 70°C, while appropriately adjusting the conditions within the above ranges so that molding failure does not occur, whereby a sheet according to the item 3.3 of JIS K 7311-1995 Standard can be obtained.

In addition, from the viewpoint of being more superior in the heat resistance, the TPU has a ratio of the complex modulus $E^*$ at 150°C to the complex modulus $E^*$ at 25°C [$E^*(150°C)/E^*(25°C)$] after polymerization and aging and before injection molding of preferably 0.67 or more, more preferably 0.68 or more, further preferably 0.70 or more, furthermore preferably 0.75 or more, furthermore preferably 0.85 or more, and furthermore preferably 0.95 or more.

The upper limit of the ratio [$E^*(150°C)/E^*(25°C)$] after polymerization and aging and before injection molding is, for example, from the viewpoint of being more superior in the heat resistance, preferably 1.20 or less, more preferably 1.15 or less, further preferably 1.10 or less, furthermore preferably 1.08 or less, furthermore preferably 1.05 or less, and furthermore preferably 1.03 or less.

As an aspect of the TPU, from the viewpoint of being more superior in the heat resistance, the ratio [$E^*(150°C)/E^*(25°C)$] after polymerization and aging and before injection molding is preferably 0.67 to 1.20, more preferably 0.68 to 1.15, further preferably 0.70 to 1.10, furthermore preferably 0.75 to 1.08, furthermore preferably 0.85 to 1.05, and furthermore preferably 0.95 to 1.03.

The value of the ratio [$E^*(150°C)/E^*(25°C)$] after polymerization and aging and before injection molding of the TPU is specifically a value measured by a method described in the section of Examples.

(Weight average molecular weight)

The weight average molecular weight (Mw) of the TPU is preferably 10,000 to 500,0000, more preferably 20,000 to 250,000, and further preferably 50,000 to 200,000.

The weight average molecular weight (Mw) of the TPU of 10,000 or more is preferred from the viewpoint of achieving better mechanical performance and durability, and Mw of 500,000 or less is preferred from the viewpoint of achieving better moldability.

The number average molecular weight (Mw) of the TPU can be determined by gel permeation chromatography (GPC) in terms of standard poly (methyl methacrylate). For example, the Mw can be measured by the following method.

<Measurement conditions of GPC>

Apparatus: GPC apparatus "HLC-8220" manufactured by TOSOH CORPORATION
Separation column: "TSKgel AWM-M (column diameter = 6.0 mm, column length = 15 cm)" manufactured by TOSOH CORPORATION (two columns connected in series)
Eluent: N,N-dimethylformamide with lithium bromide dissolved therein at 10 mM
Flow rate of eluent: 1.0 mL/minute
Column temperature: 40°C
Detection method: differential refractive index (RI)
Injection amount: 10 $\mu$L
Concentration: 1 mg/1 mL (TPU/N,N-dimethylformamide)
Standard: poly (methyl methacrylate)

[Thermoplastic polyurethane composition]

An aspect of the present invention is a thermoplastic polyurethane composition containing the TPU. In addition, other components may be incorporated, as needed, in the TPU. That is, an aspect of the present invention is a thermoplastic polyurethane composition containing the TPU and other components.

The content of the TPU in the thermoplastic polyurethane composition can be appropriately adjusted according to the application where the thermoplastic polyurethane composition is used. As an aspect of the thermoplastic polyurethane composition, the content of the TPU in 100% by mass of the thermoplastic polyurethane composition is preferably 50% by mass or more, more preferably 80% by mass or more, further preferably 90% by mass or more, and furthermore preferably 95% by mass or more. The upper limit of the content of the TPU in the thermoplastic polyurethane composition is not particularly limited, but, for example, may be 99.99% by mass.

Examples of the other components include additives, such as a plasticizer, a crosslinking agent, a filler, a crosslinking accelerator, a crosslinking aid, a softening agent, a tackifier, an age resister, a foaming agent, a processing aid, an adhesiveness imparting agent, an inorganic filler, an organic filler, a nucleating agent, a heat resistant stabilizer, a weather resistant stabilizer, an antistatic agent, a colorant, a lubricant, a flame retardant, an auxiliary flame retardant (antimony oxide, etc.), a blooming inhibitor, a mold releasing agent, a thickener, an antioxidant, a conducting agent, and a hydrolysis inhibitor (carbodiimide, etc.). In addition, an example thereof is a polymer other than the TPU which is an aspect of the present invention. Examples of the polymer other than the TPU include a TPU other than the TPU which is an aspect of the present invention, a thermosetting polyurethane, a polyvinyl chloride, a polymethacrylate ester, and a thermoplastic polyester elastomer.

The total content of the other components in the thermoplastic polyurethane composition is preferably 50% by mass or less, more preferably 20% by mass or less, further preferably 10% by mass or less, and furthermore preferably 5% by mass or less. The lower limit of the total content of the other components in the thermoplastic polyurethane composition is not particularly limited, and, for example, may be 0.01% by mass.

The TPU can achieve a low hardness even without a plasticizer. Thus, from the viewpoint of being capable of preventing bleeding-out and blooming-out of a plasticizer from the thermoplastic polyurethane composition, the thermoplastic polyurethane composition preferably does substantially not contain a plasticizer. The phrase "substantially not contain" as used herein specifically means that the content of the plasticizer in 100% by mass of the thermoplastic polyurethane composition is 1% by mass or less, preferably 0.1% by mass or less, more preferably 0.05% by mass or less, and further preferably 0.01% by mass or less. The thermoplastic polyurethane composition which is an aspect of the present invention may have a content of the plasticizer of 0% by mass in 100% by mass of the thermoplastic polyurethane composition. In other words, in the thermoplastic polyurethane composition which is an aspect of the present invention, the content of the plasticizer in 100% by mass of the thermoplastic polyurethane composition is 0 to 1% by mass, preferably 0 to 0.1% by mass, more preferably 0 to 0.05% by mass, further preferably 0 to 0.01% by mass, and may be 0% by mass.

The other components may be appropriately blended during or after polymerization of the TPU. The other components may also be blended into a raw material component (for example, the polymer polyol (a)) in advance, for example, before polymerization of the TPU.

[Molded body]

The molded body which is an aspect of the present invention contains the TPU.

Examples of the molded body include car components, such as a bumper, a side molding, a tail lamp seal, a snow chain, a ball joint seal, a boot for constant velocity joint, a bellows, a spring cover material, an ABS cable, an ABS cable plug, an instrument panel skin, a gear knob, a console box, a door seal cover, a seat material, and a knob; industrial components, such as a belt, a tube, a hose, a wire covering, a cable covering, a fire hose, a gear, a caster, packings, and a wind mill for wind power generation; films and sheets, such as various sheets, an air mattress, a synthetic leather, and a protect film; dairy necessities, such as a sole, a cushion material for shoes, a watch band, a camera grip, an animal ear tag, a smartphone case, a tablet case, a keyboard protective cover, and a decorative material; goods for medical use, such as a heart valve, a bypass device, an artificial cardiac chamber, a dialysis tube, a thin membrane, a connector, a catheter, a medical tube, and an insulator for pacemaker; construction materials, such as interior and exterior materials; and sporting goods, such as a ski board and a racket.

Among them, the low hardness thermoplastic polyurethane is particularly suitably used for a dialysis tube, a catheter, a medical tube, a sole, a cushion material for shoes, a protective film for a resin or metal, and the like.

The TPU, which is superior in the heat resistance, can be suitably used, for example, in an application where the TPU may be used in a high temperature environment, such as a car component application and an industrial component application. The TPU, which is superior in the low temperature characteristics, can also be suitably used, for example, in a case where a thermoplastic polyurethane is used in a low temperature environment, such as an application of a conveyer belt that handles foods at a low temperature or in an application where a thermoplastic polyurethane is used in a cold region.

The method for forming the molded body is not particularly limited, and, various methods, such as a forming method in which the TPU immediately after polymerization or the thermoplastic polyurethane composition is cut or machined as it is; casting or dipping in which the TPU or the thermoplastic polyurethane composition is dissolved in a solvent to form a uniform solution, which is formed into a sheet or film; and extrusion, injection molding, calendering, casting, blow molding, inflation molding, foaming, rotational molding, and slush molding in which the TPU or the thermoplastic polyurethane composition is heated and kneaded, followed by molding, can be used.

In addition, the molded body may be formed only from the TPU of the thermoplastic polyurethane composition, or may be a composite molded article of the TPU or the thermoplastic polyurethane composition and another material (for example, a laminate structure of the TPU or the thermoplastic polyurethane composition and another material). The composite molded article is not particularly limited, and may be molded by insert molding, coextrusion, or the like.

The TPU immediately after polymerization, the thermoplastic polyurethane composition, or the molded body can be used as it is for various applications. They may be used after an aging step for the purpose of enhancing the properties or the stability by promoting phase separation. The time for the aging step is not particularly limited as long as the purpose can be attained, and, for example, from the viewpoint of easily attaining the purpose, is preferably 10 minutes or more, more preferably 1 hour or more, and further preferably 2 hours or more, and furthermore preferably 3 hours or more. For example, from the viewpoint of productivity, the time is preferably 3 months or less, more preferably 1 month or less, further preferably 1 week or less, and furthermore preferably 1 day or less. In the aging step, the higher the temperature during aging is, the easier the purpose can be attained, and thus, the temperature during the aging step is preferably 30°C or higher, more preferably 40°C or higher, and further preferably 50°C or higher. In addition, from the viewpoint of preventing thermal deformation of the resulting molded body, the temperature is preferably 150°C or lower, more preferably 140°C or lower, and further preferably 130°C or lower. The temperature may be changed during the aging step. When the temperature is changed during the aging step, from the viewpoint of preventing thermal deformation of the resulting molded body, a shorter time under a high temperature is more preferred.

Examples

The embodiment will be described in more detail below with reference to examples, but the embodiment is not to be limited to the examples.

The properties of raw materials and thermoplastic polyurethanes in Examples and Comparative Examples were measured or evaluated according to the following methods.

(1) Number average molecular weight

The number average molecular weights of the polymer polyols (a) used in Examples and Comparative Examples were determined by the following calculation based on the hydroxy value of each polymer polyol (a).

.

Number average molecular weight (Mn) of polymer polyol (a) = molecular weight of KOH (56.1) $\times$ number of functional groups $\times$ 1,000 / hydroxy value (mgKOH/g)

Note that the hydroxy value was measured by the Method B (Phthalation Method) described in JIS K1557-1:2007.

(2) Durometer A hardness (HDA)

The durometer A hardness (HDA) of each thermoplastic polyurethane was measured by using a type A durometer according to JIS K 7215-1986.

(3) Low temperature characteristics (measurement of crystallization temperature (Tc))

The crystallization temperature (Tc) of each thermoplastic polyurethane was measured by using a differential scanning calorimetry (DSC) under the following measurement conditions and reading the temperature at the peak top of the exothermic peak that was observed during the third temperature lowering process described below as the crystallization temperature.

A lower value of the crystallization temperature means more superior low temperature characteristics of the thermoplastic polyurethane. In addition, in the case where no crystallization temperature is observed in the measurement temperature range in the Examples, the thermoplastic polyurethane is also superior in the low temperature characteristics.

<Measurement conditions of DSC>

· Measurement apparatus: "DSC 25" manufactured by TA Instruments
· Temperature rising rate: +10°C/minute
· Temperature lowering rate: -10°C/minute
· Nitrogen flow rate: 100 mL/minute
· Temperature profile (the following first to third processes were continuously performed in this order.)

First: the temperature was lowered from 30°C to -100°C and kept at -100°C for 5 minutes.
Second: the temperature was raised from -100°C to 200°C and kept at 200°C for 5 minutes.
Third: the temperature was lowered from 200°C to -100°C and kept at -100°C for 5 minutes.

(4) Heat resistance

The heat resistance of each thermoplastic polyurethane was evaluated by calculating the ratio of the complex modulus $E^*$ at 150°C to the complex modulus $E^*$ at 25°C [$E^*(150°C)/E^*(25°C)$].
The complex modulus $E^*$ at each temperature was determined by performing a DMA (dynamic mechanical analysis) measurement under the following conditions using a test specimen (size: 5 mm width $\times$ 15 mm length $\times$ 2 mm thickness) that was produced by punching each sheet (each of two types before and after injection molding) of the thermoplastic polyurethanes produced in Examples and Comparative Examples.

<Measurement conditions of DMA>

· Measurement apparatus: "DMA 242 E Artemis" manufactured by NETZSCH
· Temperature range: the temperature was raised from -80°C to 150°C.
· Temperature raising rate: +3°C/minute
· Frequency: 10 Hz
· Mode of deformation: tensile mode

Polymer polyols or thermoplastic polyurethanes of Examples and Comparative Examples were produced by the following method. The components (a) to (d) and polyols other than the polymer polyol (a) used were as follows.

<Polymer polyol (a)>

· Polymer polyol 1 (abbreviation "PO1"): product name "KURARAY POLYOL P-4050" (polymer of 3-methyl-1,5-pentanediol and sebacic acid (number of carbon atoms: 10), number average molecular weight: 4,000) manufactured by KURARAY CO., LTD.
· Polymer polyol 2 (abbreviation "PO2"): product name "KURARAY POLYOL P-6050" (polymer of 3-methyl-1,5-pentanediol and sebacic acid (number of carbon atoms: 10), number average molecular weight: 6,000) manufactured by KURARAY CO., LTD.
· Polymer polyol 3 (abbreviation "PO3"): product name "KURARAY POLYOL P-2050" (polymer of 3-methyl-1,5-pentanediol and sebacic acid (number of carbon atoms: 10), number average molecular weight: 2,000) manufactured by KURARAY CO., LTD.
· Polymer polyol 4 (abbreviation "PO4"): polymer of 1,3-propanediol, 3-methyl-1,5-pentanediol, and sebacic acid (number of carbon atoms: 10), number average molecular weight: 3,000
· Polymer polyol 5 (abbreviation "PO5"): polymer of 3-methyl-1,5 pentanediol and suberic acid (number of carbon atoms: 8), number average molecular weight: 4,000
· Polymer polyol 6 (abbreviation "PO6"):product name "KURARAY POLYOL P-3050" (polymer of 3-methyl-1,5 pentanediol and sebacic acid (number of carbon atoms: 10), number average molecular weight: 3,000) manufactured by KURARAY CO., LTD.

<Polyol other than polymer polyol (a)>

· Polymer polyol R1 (abbreviation "PO-R1"): product name "KURARAY POLYOL P-4010" (polymer of 3-methyl-1,5-pentanediol and adipic acid (number of carbon atoms: 6), number average molecular weight: 4,000) manufactured by KURARAY CO., LTD.
· Polymer polyol R2 (abbreviation "PO-R2"): polymer of 3-methyl-1,5-pentanediol and dodecanedioic acid (number of carbon atoms: 12), number average molecular weight: 4,000
· Polymer polyol R3 (abbreviation "PO-R3"): product name "KURARAY POLYOL P-2010" (polymer of 3-methyl-1,5 pentanediol and adipic acid (number of carbon atoms: 6), number average molecular weight: 2,000) manufactured by KURARAY CO., LTD.
· Polymer polyol R4 (abbreviation "PO-R4"): product name "PLACCEL (registered tradename) PCL220N" (polycaprolactone diol, number average molecular weight: 2,000) manufactured by Daicel Corporation

The polymer polyol 4, polymer polyol 5, and polymer polyol R2 were produced by the following method.

[Synthetic Example 1: synthesis of polymer polyol 4]

Into a reaction vessel, 1,3-propanediol (100 g), 3-methyl-1,5-pentanediol (156 g), and sebacic acid (256 g) were added, and were heated to 160°C with stirring under nitrogen purge, and after confirming that the acid value became 30 mgKOH/g or less, the mixture was cooled to 150°C. Then, a 10 wt% toluene solution of tetraisopropyl orthotitanate was added so that the amount of titanium atoms (Ti) became 20 ppm by mass relative to the finally obtained polymer polyol 4 in terms of the titanium atoms, and the temperature was increased to 180°C. After confirming that the target molecular weight was reached through measurement of the hydroxy value, water was added in an amount of about 2 wt% relative to the finally obtained polymer polyol 4 to deactivate the catalyst, and the mixture was heated at 100°C for 2 hours. Then, the mixture was cooled to 50°C and it was confirmed that the water content became 200 ppm by mass or less by pressure reduction, thus obtaining the polymer polyol 4.

[Synthetic Example 2: synthesis of polymer polyol 5]

To a reaction vessel, 3-methyl-1,5-pentanediol (286 g) and suberic acid (330 g) were added, and were heated to 160°C with stirring under nitrogen purge, and after confirming that the acid value became 30 mgKOH/g or less, the mixture was cooled to 150°C. Then, a 10 wt% toluene solution of tetraisopropyl orthotitanate was added so that the amount of titanium atoms (Ti) became 20 ppm by mass relative to the finally obtained polymer polyol 5 in terms of the titanium atoms, and the temperature was increased to 180°C. After confirming that the target molecular weight was reached through measurement of the hydroxy value, water was added in an amount of about 2 wt% relative to the finally obtained polymer polyol 5 to deactivate the catalyst, and the mixture was heated at 100°C for 2 hours. Then, the mixture was cooled to 50°C, and it was confirmed that the water content became 200 ppm by mass or less by pressure reduction, thus obtaining the polymer polyol 5.

[Synthetic Example 3: synthesis of polymer polyol R2]

To a reaction vessel, 3-methyl-1,5-pentanediol (238 g) and dodecanedioic acid (358 g) were added, and were heated to 160°C with stirring under nitrogen purge, and after confirming that the acid value became 30 mgKOH/g or less, the mixture was cooled to 150°C. Then, a 10 wt% toluene solution of tetraisopropyl orthotitanate was added so that the amount of titanium atoms (Ti) became 20 ppm by mass relative to the finally obtained polymer polyol R2 in terms of the titanium atoms, and the temperature was increased to 180°C. After confirming that the target molecular weight was reached through measurement of the hydroxy value, water was added in an amount of about 2 wt% relative to the finally obtained polymer polyol R2 to deactivate the catalyst, and the mixture was heated at 100°C for 2 hours. Then, the mixture was cooled to 50°C, and it was confirmed that the water content became 200 ppm by mass or less by pressure reduction, thus obtaining the polymer polyol R2.

<Polyisocyanate (b)>

4,4'-Diphenylmethane diisocyanate (manufactured by TOSOH CORPORATION)

<Chain extender (c)>

1,4-Butanediol (manufactured by Tokyo Chemical Industry Co., Ltd.)
Ethylene glycol (manufactured by Kanto Chemical Co., Inc.)

<Catalyst (d)>

1,4-Diazabicyclo[2,2,2]octane (manufactured by Tokyo Chemical Industry Co., Ltd.)

[Example 1]

Into a reaction vessel, the polymer polyol 1 (795 g, 0.20 mol) was put and was heated to 80°C, and then, with stirring, 4,4'-diphenylmethane diisocyanate (174 g, 0.70 mol) was added, and the temperature was increased to 100°C, followed by a reaction for 30 minutes. After stopping heating of the reaction vessel, 1,4-diazabicyclo[2,2,2]octane (0.159 g) and ethylene glycol (31 g, 0.50 mol) of 40°C were added, followed by stirring for 3 minutes, thereby obtaining a reaction product.

The obtained reaction product was cured at 80°C over 2 hours to form a sheet. Note that the "curing" means that after casting, the molecular weight of the reaction product increases so that the flowability thereof was lost and the reaction product is hardened. For example, the term is used in the different meaning from curing that occurs by a crosslinking reaction using a crosslinking agent or the like in a thermosetting resin. In the description herein, the same applies to the following description.

The obtained sheet-shaped product was aged by storing it under conditions at 125°C for 1 hour and under conditions at 100°C for 12 hours in this order, thereby obtaining a thermoplastic polyurethane sheet before injection molding.

Next, the obtained thermoplastic polyurethane sheet was cut into a strip shape. The strip-shaped sheet was melt kneaded using an injection molding machine "SE130EV" (manufactured by Sumitomo Heavy Industries, Ltd.) in a condition of a cylinder top temperature of 200°C, and was subjected to injection molding in conditions of an injection pressure of 50 MPa, a retention time in a mold of 10 seconds, and a mold temperature of 30°C, thereby obtaining a sheet that followed the item 3.3 of JIS K 7311-1995 Standard (however, the sheet size was 100 mm length × 100 mm width × 2 mm thickness). This sheet was aged at 80°C for 6 hours to obtain a thermoplastic polyurethane sheet after injection molding.

[Example 2]

Into a reaction vessel, the polymer polyol 1 (784 g, 0.20 mol) was put, and was heated to 80°C, and then, with stirring, 4,4'-diphenylmethane diisocyanate (172 g, 0.69 mol) was added, followed by a reaction at 100°C for 30 minutes. After stopping heating of the reaction vessel, 1,4-diazabicyclo[2,2,2]octane (0.0784 g) and 1,4-butanediol (44 g, 0.49 mol) of 40°C were further added, followed by stirring for 3 minutes, thereby obtaining a reaction product.

The obtained reaction product was cured at 80°C over 2 hours to form a sheet. The obtained sheet-shaped product was aged by storing it under conditions at 125°C for 1 hour and under conditions at 100°C for 12 hours in this order, thereby obtaining a thermoplastic polyurethane sheet before injection molding.

Next, the obtained thermoplastic polyurethane sheet before injection molding was subjected to the same operation as in Example 1, thereby obtaining a thermoplastic polyurethane sheet after injection molding.

[Example 3]

Into a reaction vessel, the polymer polyol 2 (853 g, 0.14 mol) was put and was heated to 80°C, and then, with stirring, 4,4'-diphenylmethane diisocyanate (125 g, 0.50 mol) was added, followed by a reaction at 100°C for 30 minutes. After stopping heating of the reaction vessel, 1,4-diazabicyclo[2,2,2]octane (0.170 g) and ethylene glycol (22 g, 0.35 mol) of 40°C were further added, followed by stirring for 3 minutes, thereby obtaining a reaction product.

The obtained reaction product was cured at 80°C over 2 hours to form a sheet. The obtained sheet-shaped product was aged by storing it under conditions at 125°C for 1 hour and under conditions at 100°C for 12 hours in this order, thereby obtaining a thermoplastic polyurethane sheet before injection molding.

Next, the obtained thermoplastic polyurethane sheet before injection molding was subjected to the same operation as in Example 1, thereby obtaining a thermoplastic polyurethane sheet after injection molding.

[Example 4]

Into a reaction vessel, the polymer polyol 3 (772 g, 0.39 mol) was put and was heated to 80°C, and then, with stirring, 4,4'-diphenylmethane diisocyanate (193 g, 0.77 mol) was added, followed by a reaction at 100°C for 30 minutes. After stopping heating of the reaction vessel, 1,4-diazabicyclo[2,2,2]octane (0.0772 g) and 1,4-butanediol (35 g, 0.39 mol) of 40°C were added, followed by stirring for 3 minutes, thereby obtaining a reaction product.

The obtained reaction product was cured at 80°C over 2 hours to form a sheet. The obtained sheet-shaped product was aged by storing it under conditions at 125°C for 1 hour and under conditions at 100°C for 12 hours in this order, thereby obtaining a thermoplastic polyurethane sheet before injection molding.

Next, the obtained thermoplastic polyurethane sheet before injection molding was subjected to the same operation as in Example 1, thereby obtaining a thermoplastic polyurethane sheet after injection molding.

[Example 5]

Into a reaction vessel, the polymer polyol 4 (763 g, 0.25 mol) was put and was heated to 80°C, and then, with stirring, 4,4'-diphenylmethane diisocyanate (191 g, 0.76 mol) was added, followed by a reaction at 100°C for 30 minutes. After stopping heating of the reaction vessel, 1,4-diazabicyclo[2,2,2]octane (0.0763 g) and 1,4-butanediol (46 g, 0.51 mol) of 40°C were added, followed by stirring for 3 minutes, thereby obtaining a reaction product.

The obtained reaction product was cured at 80°C over 2 hours to form a sheet. The obtained sheet-shaped product was aged by storing it under conditions at 125°C for 1 hour and under conditions at 100°C for 12 hours in this order, thereby obtaining a thermoplastic polyurethane sheet before injection molding.

Next, the obtained thermoplastic polyurethane sheet before injection molding was subjected to the same operation as in Example 1, thereby obtaining a thermoplastic polyurethane sheet after injection molding.

[Example 6]

Into a reaction vessel, the polymer polyol 5 (784 g, 0.20 mol) was put and was heated to 80°C, and then, with stirring, 4,4'-diphenylmethane diisocyanate (172 g, 0.69 mol) was added, followed by a reaction at 100°C for 30 minutes. After stopping heating of the reaction vessel, 1,4-diazabicyclo[2,2,2]octane (0.0784 g) and 1,4-butanediol (44 g, 0.49 mol) of 40°C were added, followed by stirring for 3 minutes, thereby obtaining a reaction product.

The obtained reaction product was cured at 80°C over 2 hours to form a sheet. The obtained sheet-shaped product was aged by storing it under conditions at 125°C for 1 hour and under conditions at 100°C for 12 hours in this order, thereby obtaining a thermoplastic polyurethane sheet before injection molding.

Next, the obtained thermoplastic polyurethane sheet before injection molding was subjected to the same operation as in Example 1, thereby obtaining a thermoplastic polyurethane sheet after injection molding.

[Example 7]

Into a reaction vessel, the polymer polyol 6 (651 g, 0.22 mol) was put and was heated to 80°C, and then, with stirring, 4,4'-diphenylmethane diisocyanate (271 g, 1.08 mol) was added, followed by a reaction at 100°C for 30 minutes. After stopping heating of the reaction vessel, 1,4-diazabicyclo[2,2,2]octane (0.0651 g) and 1,4-butanediol (78 g, 0.87 mol) of 40°C were added, followed by stirring for 3 minutes, thereby obtaining a reaction product.

The obtained reaction product was cured at 80°C over 2 hours to form a sheet. The obtained sheet-shaped product was aged by storing it under conditions at 125°C for 1 hour and under conditions at 100°C for 12 hours in this order, thereby obtaining a thermoplastic polyurethane sheet before injection molding.

Next, the obtained thermoplastic polyurethane sheet before injection molding was subjected to the same operation as in Example 1, thereby obtaining a thermoplastic polyurethane sheet after injection molding.

[Example 8]

Into a reaction vessel, the polymer polyol 1 (653 g, 0.16 mol) was put and was heated to 80°C, and then, with stirring, 4,4'-diphenylmethane diisocyanate (266 g, 1.06 mol) was added, followed by a reaction at 100°C for 30 minutes. After stopping heating of the reaction vessel, 1,4-diazabicyclo[2,2,2]octane (0.0653 g) and 1,4-butanediol (81 g, 0.90 mol) of 40°C were added, followed by stirring for 3 minutes, thereby obtaining a reaction product.

The obtained reaction product was cured at 80°C over 2 hours to form a sheet. The obtained sheet-shaped product was aged by storing it under conditions at 125°C for 1 hour and under conditions at 100°C for 12 hours in this order, thereby obtaining a thermoplastic polyurethane sheet before injection molding.

Next, the obtained thermoplastic polyurethane sheet before injection molding was subjected to the same operation as in Example 1, thereby obtaining a thermoplastic polyurethane sheet after injection molding.

[Comparative Example 1]

Into a reaction vessel, the polymer polyol R1 (795 g, 0.20 mol) was put and was heated to 80°C, and then, with stirring, 4,4'-diphenylmethane diisocyanate (174 g, 0.70 mol) was added, followed by a reaction at 100°C for 30 minutes. After stopping heating of the reaction vessel, 1,4-diazabicyclo[2,2,2]octane (0.159 g) and ethylene glycol (31 g, 0.50 mol) of 40°C were added, followed by stirring for 3 minutes, thereby obtaining a reaction product.
The obtained reaction product was cured at 80°C over 2 hours to form a sheet. The obtained sheet-shaped product was aged by storing it under conditions at 125°C for 1 hour and under conditions at 100°C for 12 hours in this order, thereby obtaining a thermoplastic polyurethane sheet before injection molding.
Next, the obtained thermoplastic polyurethane sheet before injection molding was subjected to the same operation as in Example 1, thereby obtaining a thermoplastic polyurethane sheet after injection molding.

[Comparative Example 2]

Into a reaction vessel, the polymer polyol R2 (784 g, 0.20 mol) was put and was heated to 80°C, and then, with stirring, 4,4'-diphenylmethane diisocyanate (172 g, 0.69 mol) was added, followed by a reaction at 100°C for 30 minutes. After stopping heating of the reaction vessel, 1,4-diazabicyclo[2,2,2]octane (0.0784 g) and 1,4-butanediol (44 g, 0.49 mol) of 40°C were added, followed by stirring for 3 minutes, thereby obtaining a reaction product.
The obtained reaction product was cured at 80°C over 2 hours to form a sheet. The obtained sheet-shaped product was aged by storing it under conditions at 125°C for 1 hour and under conditions at 100°C for 12 hours in this order, thereby obtaining a thermoplastic polyurethane sheet before injection molding.
Next, the obtained thermoplastic polyurethane sheet before injection molding was subjected to the same operation as in Example 1, thereby obtaining a thermoplastic polyurethane sheet after injection molding.

[Comparative Example 3]

Into a reaction vessel, the polymer polyol R2 (795 g, 0.20 mol) was put and was heated to 80°C, and then, with stirring, 4,4'-diphenylmethane diisocyanate (174 g, 0.70 mol) was added, followed by a reaction at 100°C for 30 minutes. After stopping heating of the reaction vessel, 1,4-diazabicyclo[2,2,2]octane (0.159 g) and ethylene glycol (31 g, 0.50 mol) of 40°C were added, followed by stirring for 3 minutes, thereby obtaining a reaction product.
The obtained reaction product was cured at 80°C over 2 hours to form a sheet. The obtained sheet-shaped product was aged by storing it under conditions at 125°C for 1 hour and under conditions at 100°C for 12 hours in this order, thereby obtaining a thermoplastic polyurethane sheet before injection molding.
Next, the obtained thermoplastic polyurethane sheet before injection molding was subjected to the same operation as in Example 1, thereby obtaining a thermoplastic polyurethane sheet after injection molding.

[Comparative Example 4]

Into a reaction vessel, the polymer polyol R3 (611 g, 0.31 mol) was put and was heated to 80°C, and then, with stirring, 4,4'-diphenylmethane diisocyanate (306 g, 1.22 mol) was added, followed by a reaction at 100°C for 30 minutes. After stopping heating of the reaction vessel, 1,4-diazabicyclo[2,2,2]octane (0.0611 g) and 1,4-butanediol (83 g, 0.92 mol) of 40°C were added, followed by stirring for 3 minutes, thereby obtaining a reaction product.
The obtained reaction product was cured at 80°C over 2 hours to form a sheet. The obtained sheet-shaped product was aged by storing it under conditions at 125°C for 1 hour and under conditions at 100°C for 12 hours in this order, thereby obtaining a thermoplastic polyurethane sheet before injection molding.
Next, the obtained thermoplastic polyurethane sheet before injection molding was subjected to the same operation as in Example 1, thereby obtaining a thermoplastic polyurethane sheet after injection molding.

[Comparative Example 5]

Into a reaction vessel, the polymer polyol R4 (611 g, 0.31 mol) was put and was heated to 80°C, and then, with stirring, 4,4'-diphenylmethane diisocyanate (306 g, 1.22 mol) was added, followed by a reaction at 100°C for 30 minutes. After stopping heating of the reaction vessel, 1,4-diazabicyclo[2,2,2]octane (0.0611) and 1,4-butanediol (83 g, 0.92 mol) of 40°C were added, followed by stirring for 3 minutes, thereby obtaining a reaction product.
The obtained reaction product was cured at 80°C over 2 hours to form a sheet. The obtained sheet-shaped product was aged by storing it under conditions at 125°C for 1 hour and under conditions at 100°C for 12 hours in this order, thereby obtaining a thermoplastic polyurethane sheet before injection molding.

Next, the obtained thermoplastic polyurethane sheet before injection molding was subjected to the same operation as in Example 1, thereby obtaining a thermoplastic polyurethane sheet after injection molding.

[Table 1]

Table 1

| | | unit | Example 1 | Example 2 | Example 3 | Example 4 | Example 5 | Example 6 | Example 7 | Example 8 |
|---|---|---|---|---|---|---|---|---|---|---|
| Polymer polyol (a) | Number of C atoms in PO1 (a2): 10 | parts by mass | 79.5 | 78.4 | - | - | - | - | - | 65.3 |
| | Number of C atoms in PO2 (a2): 10 | parts by mass | - | - | 85.3 | - | - | - | - | - |
| | Number of C atoms in PO3 (a2): 10 | parts by mass | - | - | - | 77.2 | - | - | - | - |
| | Number of C atoms in PO4 (a2): 10 | parts by mass | - | - | - | - | 76.3 | - | - | - |
| | Number of C atoms in PO5 (a2): 8 | parts by mass | - | - | - | - | - | 78.4 | - | - |
| | Number of C atoms in PO6 (a2): 10 | parts by mass | - | - | - | - | - | - | 65.1 | - |
| Polyisocyanate (b) | MDI | parts by mass | 17.4 | 17.2 | 12.5 | 19.3 | 19.1 | 17.2 | 27.1 | 26.6 |
| Chain extender (c) | EG | parts by mass | 3.1 | - | 2.2 | - | - | - | - | - |
| | BD | parts by mass | - | 4.4 | - | 3.5 | 4.6 | 4.4 | 7.8 | 8.1 |
| Catalyst (d) | DABCO | ppm by mass (*1) | 159 | 78.4 | 170 | 77.2 | 76.3 | 78.4 | 65.1 | 65.3 |
| Durometer A hardness (HDA) | | - | 65 | 68 | 62 | 64 | 71 | 68 | 89 | 90 |
| Crystallization temperature (Tc) | | °C | -47.9 | -46.7 | -45.4 | not observed | -43.2 | not observed | -47.6 | -47.1 |
| $E*(150°C)/E*$ (25°C) | Before injection molding | - | 0.98 | 0.77 | 1.00 | 0.79 | 0.69 | 0.67 | 0.68 | 0.71 |
| | After injection molding | - | 0.32 | 0.25 | 0.33 | 0.21 | 0.23 | 0.22 | 0.22 | 0.23 |
| (*1): Amount used relative to total amount of raw materials (a) to (c) | | | | | | | | | | |

EP 4 782 474 A1

[Table 2]

Table 2

| | | unit | Comparative Example 1 | Comparative Example 2 | Comparative Example 3 | Comparative Example 4 | Comparative Example 5 |
|---|---|---|---|---|---|---|---|
| Polyol other than polymer polyol (a) | Number of C atoms in PO-R1 (a2): 6 | parts by mass | 79.5 | - | - | - | - |
| | Number of C atoms in PO-R2 (a2): 12 | parts by mass | - | 78.4 | 79.5 | - | - |
| | Number of C atoms in PO-R3 (a2): 6 | parts by mass | - | - | - | 61.1 | - |
| | Number of C atoms in PO-R4 (a2): 0 | parts by mass | - | - | - | - | 61.1 |
| Polyisocyanate (b) | MDI | parts by mass | 17.4 | 17.2 | 17.4 | 30.6 | 30.6 |
| Chain extender (c) | EG | parts by mass | 3.1 | - | 3.1 | - | - |
| | BD | parts by mass | - | 4.4 | - | 8.3 | 8.3 |
| Catalyst (d) | DABCO | ppm by mass (*2) | 159 | 78.4 | 159 | 61.1 | 61.1 |
| Durometer A hardness (HDA) | | - | 65 | 75 | 74 | 90 | 91 |
| Crystallization temperature (Tc) | | °C | not observed | -12.9 | -13.5 | not observed | not observed |
| E*(150°C)/E*(25°C) | Before injection molding | - | 0.66 | 1.04 | 1.05 | 0.51 | 0.47 |
| | After injection molding | - | 0.14 | 0.34 | 0.35 | 0.11 | 0.10 |
| (*2): Amount used relative to total amount of polyol other than polymer polyol (a) and raw materials (b) and (c) | | | | | | | |

The compounds other than the polymer polyols represented by the abbreviations in Tables 1 and 2 are as follows.

The abbreviations of the polymer polyol are as described above.

MDI: 4,4'-diphenylmethane diisocyanate
EG: ethylene glycol
BD: 1,4-butanediol
DABCO: 1,4-diazabicyclo[2,2,2]octane

It was found from the results in Tables 1 and 2 that, since the thermoplastic polyurethanes of Examples 1 to 8 each contained the structural unit (A) derived from the polymer polyol (a) having a hydroxy group at a terminal thereof, the structural unit (B) derived from the polyisocyanate (b), and the structural unit (C) derived from the chain extender (c), the polymer polyol (a) contained structural units derived from the branched polyol (a1) and the polycarboxylic acid (a2) having 7 to 11 carbon atoms and had a number average molecular weight of 500 or more, and the structural unit (A) was contained in an amount of 50 to 90% by mass, the structural unit (B) was contained in an amount of 8 to 45% by mass, and the structural unit (C) was contained in an amount of 2 to 10% by mass in 100% by mass of all structural units in the thermoplastic polyurethane, the thermoplastic polyurethanes of Examples 1 to 8 were able to achieve both a better heat resistance and superior low temperature characteristics as compared with the thermoplastic polyurethanes of Comparative Examples shown in Table 1.

In addition, it can be seen that the thermoplastic polyurethanes of Examples 1 to 8 can maintain a low durometer A hardness even without a plasticizer.

It was found that the thermoplastic polyurethanes of Comparative Example 1 and Comparative Example 4 were inferior in the heat resistance as compared with the thermoplastic polyurethanes of Examples. This is supposedly because, in the thermoplastic polyurethanes of Comparative Example 1 and Comparative Example 4, the structural unit derived from a polycarboxylic acid constituting the polymer polyol is derived from a polycarboxylic acid having 6 carbon atoms.

It was also found that the thermoplastic polyurethanes of Comparative Examples 2 and 3 were inferior in the low temperature characteristics as compared with the thermoplastic polyurethanes of Examples. This is supposedly because, in the thermoplastic polyurethanes of Comparative Examples 2 and 3, the structural unit derived from a polycarboxylic acid constituting the polymer polyol is derived from a polycarboxylic acid having 12 carbon atoms.

It was found that the thermoplastic polyurethane of Comparative Example 5 was inferior in the heat resistance as compared with the thermoplastic polyurethanes of Examples. This is supposedly because, in the thermoplastic polyurethane of Comparative Example 5, the structural unit constituting the polymer polyol is derived from caprolactone having 6 carbon atoms.

Industrial Applicability

As is also shown in the results of Examples as described above, the thermoplastic polyurethane which is an aspect of the present invention can achieve both a good heat resistance and superior low temperature characteristics. Furthermore, the TPU can achieve a low hardness even without containing a plasticizer.

The TPU and a thermoplastic polyurethane composition containing the TPU are suitably used for, for example, a dialysis tube, a catheter, a medical tube, a sole, a cushion material for shoes, and a protective film for a resin or metal. In addition, because of a superior heat resistance, the TPU and a thermoplastic polyurethane composition containing the TPU can be suitably used for, for example, applications where the thermoplastic polyurethane may be used under a high temperature environment, such as a car component application and an industrial component application. In addition, because of a superior low temperature characteristics, the TPU and a thermoplastic polyurethane composition containing the TPU can be suitably used, for example, in a case where the thermoplastic polyurethane is used in a low temperature environment, such as an application of a conveyer belt that handles foods at a low temperature, or in an application where the thermoplastic polyurethane is used in a cold region.

**Claims**

1. A thermoplastic polyurethane comprising a structural unit (A) derived from a polymer polyol (a) having a hydroxy group at a terminal thereof, a structural unit (B) derived from a polyisocyanate (b), and a structural unit (C) derived from a chain extender (c),

the polymer polyol (a) containing structural units derived from a branched polyol (a1) and a polycarboxylic acid (a2) having 7 to 11 carbon atoms, and having a number average molecular weight of 500 or more,
the structural unit (A) being contained in an amount of 50 to 90% by mass, the structural unit (B) being contained in an amount of 8 to 45% by mass, the structural unit (C) being contained in an amount of 2 to 10% by mass, in 100% by mass of all structural units in the thermoplastic polyurethane.

2. The thermoplastic polyurethane according to claim 1, wherein the structural unit (A) is contained in an amount of 60 to 90% by mass, the structural unit (B) is contained in an amount of 8 to 38% by mass, and the structural unit (C) is contained in an amount of 2 to 8% by mass, in 100% by mass of all structural units in the thermoplastic polyurethane.

3. The thermoplastic polyurethane according to claim 1 or 2, wherein the branched polyol (a1) is 3-methyl-1,5-pentanediol.

4. The thermoplastic polyurethane according to any one of claims 1 to 3, wherein the chain extender (c) is a diol having a molecular weight of less than 500.

5. The thermoplastic polyurethane according to any one of claims 1 to 4, wherein the thermoplastic polyurethane has a durometer A hardness as measured according to JIS K 7215-1986 of HDA95 or less.

6. The thermoplastic polyurethane according to any one of claims 1 to 5, wherein the thermoplastic polyurethane has a durometer A hardness as measured according to JIS K 7215-1986 of HDA80 or less.

7. The thermoplastic polyurethane according to any one of claims 1 to 6, wherein the thermoplastic polyurethane has a crystallization temperature of -15°C or less, or has no crystallization temperature.

8. The thermoplastic polyurethane according to any one of claims 1 to 7, wherein the thermoplastic polyurethane has a ratio of a complex modulus $E^*$ at 150°C to a complex modulus $E^*$ at 25°C [$E^*(150°C)/E^*(25°C)$] of a sheet produced by injection molding of 0.15 or more.

9. A method for producing a thermoplastic polyurethane, the method comprising reacting at least a polymer polyol (a) having a hydroxy group at a terminal thereof in an amount of 50 to 90% by mass, a polyisocyanate (b) in an amount of 8 to 45% by mass, and a chain extender (c) in an amount of 2 to 10% by mass, in 100% by mass of a total amount of raw material components of the thermoplastic polyurethane, to produce the thermoplastic polyurethane,
the polymer polyol (a) containing structural units derived from a branched polyol (a1) and a polycarboxylic acid (a2) having 7 to 11 carbon atoms, and having a number average molecular weight of 500 or more.

10. The method for producing a thermoplastic polyurethane according to claim 9, the method comprising reacting at least the polymer polyol (a) having a hydroxy group at a terminal thereof in an amount of 60 to 90% by mass, the polyisocyanate (b) in an amount of 8 to 38% by mass, and the chain extender (c) in an amount of 2 to 8% by mass, in 100% by mass of the total amount of raw material components of the thermoplastic polyurethane, to produce the thermoplastic polyurethane.

11. The method for producing a thermoplastic polyurethane according to claim 9 or 10, wherein a catalyst (d) is used in an amount of 0.1 to 1,000 ppm by mass relative to a total amount of the polymer polyol (a), the polyisocyanate (b), and the chain extender (c).

12. A thermoplastic polyurethane composition comprising the thermoplastic polyurethane according to any one of claims 1 to 8.

13. A molded article comprising the thermoplastic polyurethane according to any one of claims 1 to 8.

## INTERNATIONAL SEARCH REPORT

| International application No. |
| --- |
| **PCT/JP2024/033609** |

| A. | CLASSIFICATION OF SUBJECT MATTER |
| --- | --- |

*C08G 18/66*(2006.01)i
FI:   C08G18/66 037

According to International Patent Classification (IPC) or to both national classification and IPC

| B. | FIELDS SEARCHED |
| --- | --- |

Minimum documentation searched (classification system followed by classification symbols)

C08G18/00-18/87

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2012-180467 A (KURARAY CO., LTD.) 20 September 2012 (2012-09-20) claims, column "examples", etc. | 1-13 |
| X | JP 2011-178920 A (KURARAY CO., LTD.) 15 September 2011 (2011-09-15) claims, column "examples" (e.g. example 2), etc. | 1-13 |
| X | JP 2005-154451 A (ZEON CORPORATION) 16 June 2005 (2005-06-16) claims, column "examples"(e.g. paragraph [0052]), etc. | 1-13 |
| X | JP 2005-194343 A (TOYO BOSEKI KABUSHIKI KAISHA) 21 July 2005 (2005-07-21) claims, column "examples" (e.g. tables 1-2), etc. | 1-13 |
| X | JP 2000-17041 A (KURARAY CO., LTD.) 18 January 2000 (2000-01-18) claims, column "examples" (e.g. example 4), etc. | 1-13 |
| X | JP 11-35818 A (KURARAY CO., LTD.) 09 February 1999 (1999-02-09) claims, column "examples" (e.g. example 8), etc. | 1-13 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 November 2024** | **10 December 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**EP 4 782 474 A1**

**INTERNATIONAL SEARCH REPORT**

| International application No. |
| --- |
| **PCT/JP2024/033609** |

**C. DOCUMENTS CONSIDERED TO BE RELEVANT**

| Category* | Citation of document, with indication, where appropriate, of the relevant passages | Relevant to claim No. |
| --- | --- | --- |
| X | JP 10-130954 A (KURARAY CO., LTD.) 19 May 1998 (1998-05-19)<br>claims, column "examples", etc. | 1-13 |
| X | JP 8-81826 A (KURARAY CO., LTD.) 26 March 1996 (1996-03-26)<br>claims, column "examples" (e.g. examples 3-5), etc. | 1-13 |
| X | JP 7-316254 A (NIPPON POLYURETHANE IND CO., LTD.) 05 December 1995<br>(1995-12-05)<br>claims, column "examples" (e.g. tables 1-2), etc. | 1-13 |
| X | JP 7-195566 A (KURARAY CO., LTD.) 01 August 1995 (1995-08-01)<br>claims, column "examples" (e.g. example 3), etc. | 1-13 |
| X | JP 5-43646 A (KURARAY CO., LTD.) 23 February 1993 (1993-02-23)<br>claims, column "examples" (e.g. examples 1-2), etc. | 1-13 |
| X | JP 4-45118 A (KURARAY CO., LTD.) 14 February 1992 (1992-02-14)<br>claims, column "examples" (e.g. reference example 3), etc. | 1-13 |
| X | JP 2018-536059 A (WANHUA CHEMICAL GROUP CO., LTD.) 06 December 2018<br>(2018-12-06)<br>claims, column "examples" (e.g. example 3), etc. | 1-13 |
| X | WO 94/25529 A1 (KURARAY CO., LTD.) 10 November 1994 (1994-11-10)<br>claims, column "examples" (e.g. table 5), etc. | 1-13 |
| A | JP 2017-530240 A (HENKEL AG & CO. KGAA) 12 October 2017 (2017-10-12) | 1-13 |

Form PCT/ISA/210 (second sheet) (July 2022)

## INTERNATIONAL SEARCH REPORT
### Information on patent family members

International application No.

**PCT/JP2024/033609**

| Patent document cited in search report | | | Publication date (day/month/year) | Patent family member(s) | | | Publication date (day/month/year) |
|---|---|---|---|---|---|---|---|
| JP | 2012-180467 | A | 20 September 2012 | (Family: none) | | | |
| JP | 2011-178920 | A | 15 September 2011 | (Family: none) | | | |
| JP | 2005-154451 | A | 16 June 2005 | WO | 2005/049731 | A1 | |
| JP | 2005-194343 | A | 21 July 2005 | (Family: none) | | | |
| JP | 2000-17041 | A | 18 January 2000 | US claims, column "examples" (e.g. example 4), etc. EP KR CN | 6197915 974608 10-2000-0011476 1242385 | B1 A1 A A | |
| JP | 11-35818 | A | 09 February 1999 | (Family: none) | | | |
| JP | 10-130954 | A | 19 May 1998 | (Family: none) | | | |
| JP | 8-81826 | A | 26 March 1996 | (Family: none) | | | |
| JP | 7-316254 | A | 05 December 1995 | (Family: none) | | | |
| JP | 7-195566 | A | 01 August 1995 | (Family: none) | | | |
| JP | 5-43646 | A | 23 February 1993 | (Family: none) | | | |
| JP | 4-45118 | A | 14 February 1992 | (Family: none) | | | |
| JP | 2018-536059 | A | 06 December 2018 | US claims, column "examples" (e.g. example 3), etc. WO CN | 2018/0291141 2017/079988 106674471 | A1 A2 A | |
| WO | 94/25529 | A1 | 10 November 1994 | US claims, column "examples" (e.g. table 5), etc. EP KR TW | 5688890 651017 10-1995-0702224 336943 | A A1 A B | |
| JP | 2017-530240 | A | 12 October 2017 | US WO EP TW KR CN | 2017/0190852 2016/050531 3002309 201615792 10-2017-0063661 107075066 | A1 A1 A1 A A A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020060092516 A
- CN 112142960 A